# EUROPÄISCHE PATENTANMELDUNG

(11) **EP 2 243 573 A2**
(43) Veröffentlichungstag der Anmeldung: **27.10.2010**
(21) Anmeldenummer: 10160251.4
(22) Anmeldetag: 19.04.2010
(51) Int. Cl.: B21K 25/00, B23P 11/00, F16F 9/32, F16J 1/12

(54) **Kolbenstange mit einem montierbaren Zapfen**

(30) Priorität: 24.04.2009 DE 102009002616
(71) Anmelder: ZF Friedrichshafen AG, 88038 Friedrichshafen (DE)
(72) Erfinder: Zeißner, Bernd, 97332 Volkach (DE); Breun, Wolfgang, 97464 Niederwerrn (DE); Hegmann, Michael, 97453 Schonungen (DE); Schöpplein, Rainer, 97422 Schweinfurt (DE); Stretz, Klaus, 97437 Haßfurt (DE); Weingärtner, Bernhard, 97478 Knetzgau (DE)

(57) **Zusammenfassung**

Kolbenstange (5), die mit einem Kolbenstangenzapfen (7) über eine Einschubverbindung axial in Überdeckung steht, wobei der Überdeckungsbereich der Kolbenstange (5) mit der Kolbenstangenzapfens (7) zumindest teilweise als Konus ausgeführt ist und eine in Längsrichtung der Kolbenstange (3) kraftschlüssige Verbindung bildet, wobei eine Formschlussverbindung im Überdeckungsbereich (5ü) eine Verdrehsicherung darstellt, und eines der zu verbindenden Bauteile Kolbenstange-Kolbenstangenzapfen (5,7) im Überdeckungsbereich (5ü) mit dem anderen Bauteil im unmontierten Zustand einen Konus mit einem unrunden, mit einem Übermaß ausgeführten Querschnitt (21a-21c) zum anderen Bauteil aufweist.

## Beschreibung

Die Erfindung betrifft eine Kolbenstange gemäß dem Oberbegriff von Patentanspruch 1.

Aus der DE 30 20 749 A1 ist eine Kolbenstange für einen Schwingungsdämpfer bekannt, die über ihre gesamte Länge hohl ausgeführt ist und endseitig von einem Zapfenelement verschlossen wird. Das Zapfenelement trägt einen Kolben, der mit Ventilscheiben bestückt ist. Zur Fixierung aber auch zur Einstellung der Vorspannung der Ventilscheiben auf dem Kolben dient eine Kolbenzapfenmutter.

Der große Vorteil dieses Konstruktionsprinzips besteht darin, dass der Kolben als Baueinheit in einem separaten Arbeitsabschnitt montiert und auf seine Funktionsfähigkeit überprüft werden kann. Wird z. B. die angestrebte Dämpfkraft von den Ventilscheiben nicht erreicht, dann kann man gegebenenfalls den Kolbenstangenzapfen, den Kolben und die Ventilscheiben u. U. als Ausschuss abschreiben, die vergleichsweise teure Kolbenstange ist jedoch nicht betroffen.

Die Kolbenstange führt je nach Achskonstruktion eine rotatorische Relativbewegung zum Zylinder des Schwingungsdämpfers aus. Deshalb ist dafür zu sorgen, dass zwischen dem Kolbenstangenzapfen und der hohlen Kolbenstange eine Verdrehsicherung vorliegt.

In der Ausführung nach Fig. 6 verfügt der Kolbenstangenzapfen im Überdeckungsbereich mit der Kolbenstange über mindestens eine partielle Nut, in die mittels eines Rundknetverfahrens Volumenanteile der Kolbenstange verdrängt werden und dabei die Nut auffüllen. Mit dem Rundknetverfahren wird jedoch nicht nur die Formschlussverbindung hergestellt, sondern insgesamt ein Kolbenstangenabschnitt im Durchmesser reduziert, um eine tragende Verbindung mit dem Kolbenstangenzapfen herzustellen.

Das Rundknetverfahren an sich bringt einen erheblichen Werkzeugverschleiß mit sich. Des Weiteren lässt sich der Fertigungsablauf nur schwierig organisieren, da eine Rundknetmaschine akustisch zur Umgebung gekapselt sein muss, um die Lärmemission auf ein erträgliches Niveau zu halten. Folglich lässt sich dieses Arbeitsverfahren nur schwer in eine Fertigungslinie integrieren.

Die Aufgabe der vorliegenden Erfindung besteht darin, eine Alternativlösung für eine Kolbenstangen-Kolbenstangenzapfen-Verbindung zu erreichen, bei dem die aus dem Stand der Technik bekannten Fertigungsprobleme gelöst sind.

Erfindungsgemäß wird die Aufgabe dadurch gelöst, dass eines der zu verbindenden Bauteile Kolbenstange-Kolbenstangenzapfen im Überdeckungsbereich mit dem anderen Bauteil im unmontierten Zustand einen Konus mit einem unrunden und mit einem Übermaß ausgeführten Querschnitt zum anderen Bauteil aufweist.

Der große Vorteil besteht darin, dass man aufgrund der einfachen axialen Presspassung zwischen dem Kolbenstangenzapfen und der Kolbenstange auf die Verwendung von Rundknetmaschinen verzichten kann.

In weiterer vorteilhafter Ausgestaltung ist der unrunde Querschnitt als ein N-Eck-Polygon ausgeführt. Ein Polygonprofil bewirkt eine axiale und eine rotatorische Sicherung des Kolbenstangenzapfens zur Kolbenstange. Man kann eine sehr große Übertragungsfläche nutzen bzw. es liegt eine große tragen Kontaktfläche zwischen dem Kolbenstangenzapfen und der Kolbenstange vor.

Gemäß einem vorteilhaften Unteranspruch weist die Kolbenstange im unmontierten Zustand des Kolbenstangenzapfens im Überdeckungsbereich eine Mantelfläche mit einem konstanten Durchmesser auf. Diese Ausgestaltung ermöglicht die Verwendung von sehr einfachen Stangenabschnitten, die bis zur Verbindung mit dem Kolbenstangenzapfen fertig bearbeitet werden können, d. h. maßliche Bearbeitung aber auch Oberflächenbeschichtung.

Bei einer ersten Variante ist der Kolbenstangenzapfen in einem hohlen Abschnitt der Kolbenstange eingepresst. Die Kolbenstange kann als Rohr ausgeführt sein, aber auch über eine endseitige Sacklochöffnung verfügen.

In weiterer vorteilhafter Ausgestaltung weist der Kolbenstangenzapfen eine kreisringförmige Anschlagfläche auf, die an einer Stirnfläche der Kolbenstange anliegt. Damit kann sehr einfach eine wegabhängige Montageregelung verwendet werden.

Bei einer Alternativvariante weist der Kolbenstangenzapfen eine topfförmige Aufnahme für ein Ende der Kolbenstange auf. Der Kolbenstangenzapfen wird auf die zylindrische Kolbenstange gepresst.

Um die Wandstärke des Kolbenstangenzapfens wegen der konisch geformten Aufnahme, die sich in Richtung des Randes der Aufnahme vergrößert, nicht unverhältnismäßig anwachsen zu lassen, weist der Kolbenstangenzapfen im Bereich der Aufnahme einen außenseitigen Ringsteg auf.

Man kann vorsehen, dass die Wandstärke des außenseitigen Ringstegs am Kolbenstangenzapfen größer ist als die Wandstärke im Bereich der Aufnahme, um den Ringsteg als Abstützfläche für einen an sich bekannten Zuganschlag zu verwenden.

Die Presspassung der Einschubverbindung ist derart dimensioniert, dass eine Lockerung praktisch ausgeschlossen ist. Dennoch kann man vorsehen, dass zwischen der Kolbenstange und dem Kolbenstangenzapfen eine axiale Sicherungsverbindung vorliegt.

Diese Sicherungsverbindung kann ganz einfach von mindestens einer Sicke gebildet werden.

Anhand der folgenden Figurenbeschreibung soll die Erfindung näher erläutert werden.

Es zeigt:
- Fig. 1: Kolbenstange mit Kolbenstangenzapfen und Kolben im Längsschnitt
- Fig. 2a - 2d: Ansicht auf den Kolbenstangenzapfen
- Fig. 3: Kolbenstange mit aufgeschobenem topfförmigen Kolbenstangenzapfen

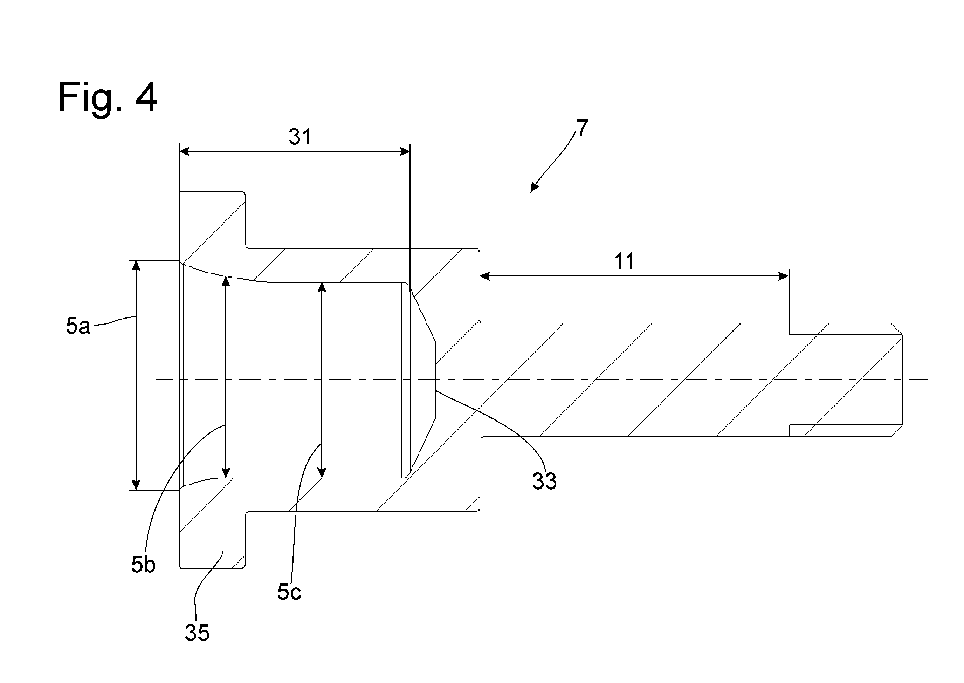

- Fig. 4: Kolbenstangenzapfen nach Fig. 3
- Fig. 5a - 5c: Ansicht des topfförmigen Kolbenstangenzapfens nach Fig. 3

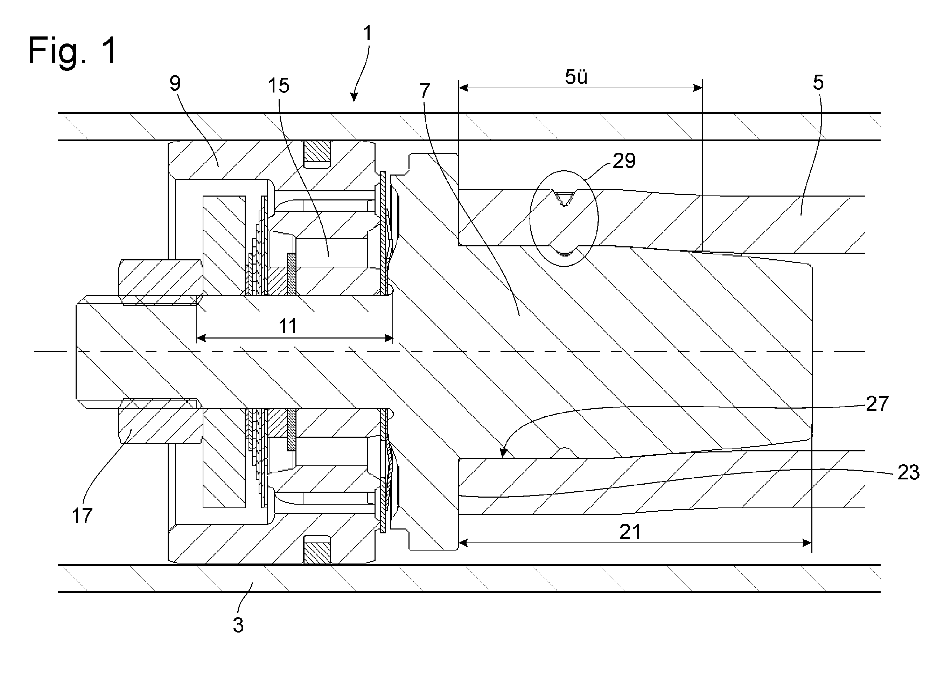

Die Fig. 1 zeigt einen Ausschnitt aus einem Schwingungsdämpfer 1 beliebiger Bauform, in dessen Zylinder 3 eine Kolbenstangenbaugruppe, umfassend eine Kolbenstange 5 mit einem Kolbenstangenzapfen 7 und einem daran befestigten Kolben 9 axial beweglich geführt ist.

In diesem Ausführungsbeispiel ist die Kolbenstange 5 vollständig hohl ausgeführt, doch ist es auch denkbar, dass die Kolbenstange 5 ein endseitiges Sackloch aufweist. Die Kolbenstange 5 weist im unmontierten Zustand des Kolbenstangenzapfens einen konstanten Innen- und Außendurchmesser auf.

Der Kolbenstangenzapfen 7 verfügt über einen Tragabschnitt 11, auf dem der Kolben 9 zusammen mit einer Anzahl von Ventilscheiben 13 angeordnet ist. Für das Verständnis der Erfindung ist die exakte Ausführung der Ventilscheiben 13 und der Drosselkanäle 15 im Kolben unwichtig. Über eine Kolbenmutter 17 werden die Ventilscheiben 13 zusammen mit dem Kolben 9 auf dem Tragabschnitt 11 verspannt, wobei ein Flansch 19 als Spannanschlag dient.

Der Kolbenstangenzapfen 7 weist an seinem dem Tragabschnitt 11 abgewandten Ende einen Befestigungsabschnitt 21 auf, der mit der hohlen Kolbenstange 5 in Überdeckung steht und damit eine Einschubverbindung bildet. Der Befestigungsabschnitt 21 ist im Längsschnitt zumindest auf einer Teillänge konisch ausgeführt und weist, wie die Figurenfolge 2a - 2d zeigt, ein einen unrunden Querschnitt 21a - 21c auf, der im unmontierten Zustand mit einem Übermaß zum Innendurchmesser der Kolbenstange 5 ausgeführt ist. Der unrunde Querschnitt wird in diesem Beispiel als ein 3-Eck-Polygon gebildet, kann jedoch auch ein beliebiges N-Eck-Polygon sein.

Im Montageablauf wird die rohrförmige Kolbenstange 5 auf Maß bearbeitet und anschließend oberflächenbeschichtet, beispielsweise verchromt. Zeitlich parallel dazu wird der z. B. als Schmiedeteil gefertigte Kolbenstangenzapfen 7 mit den Ventilscheiben 13 und dem Kolben 9 bestückt. Anschließend erfolgt die axiale Vorspannung der in Reihe angeordneten Bauteile 9; 13 über die Kolbenmutter 17. Diese Baueinheit kann auf einem Strömungsprüfstand auf ihre Dämpfkraftkennlinie überprüft werden.

Anschließend wird der Kolbenstangenzapfen 7 mit seinem Befestigungsabschnitt 21 in die hohle Kolbenstange 5 gepresst, bis der Kolbenstangenzapfen 7 mit einer kreisringförmigen Anschlagfläche 23 am Flansch an einer Stirnfläche 25 der Kolbenstange 5 anliegt. Dabei wird die Kolbenstange 5 in einem Überdeckungsbereich 5 ü geringfügig aufgeweitet, wodurch eine flächige Pressverbindung zwischen dem Befestigungsabschnitt 21 des Kolbenstangenzapfens 5 und einer Innenmantelfläche 27 der Kolbenstange 5 geschlossen wird. Das Polygonprofil sorgt für eine Verdrehsicherung des Kolbenstangenzapfens 7 innerhalb der Kolbenstange 5. Durch den relativ flachen Konuswinkel ist schon eine ausreichende Sicherheit gegen Auszugskräfte erreicht. Zusätzlich kann man jedoch vorsehen, dass zwischen der Kolbenstange 5 und dem Kolbenstangenzapfen 7 eine axiale Sicherungsverbindung 29 vorliegt, die z. B. von einer Sicke im Befestigungsabschnitt 21 des Kolbenstangenzapfens 7 gebildet wird, in die Volumenanteile der Kolbenstange 5 durch eine radiale Volumenverschiebung eingeformt werden.

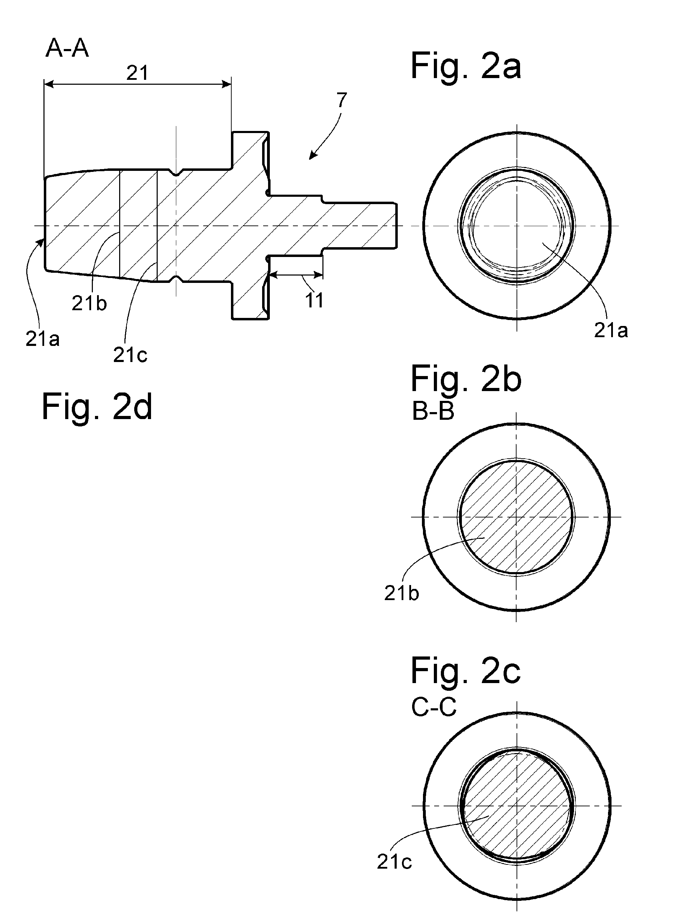

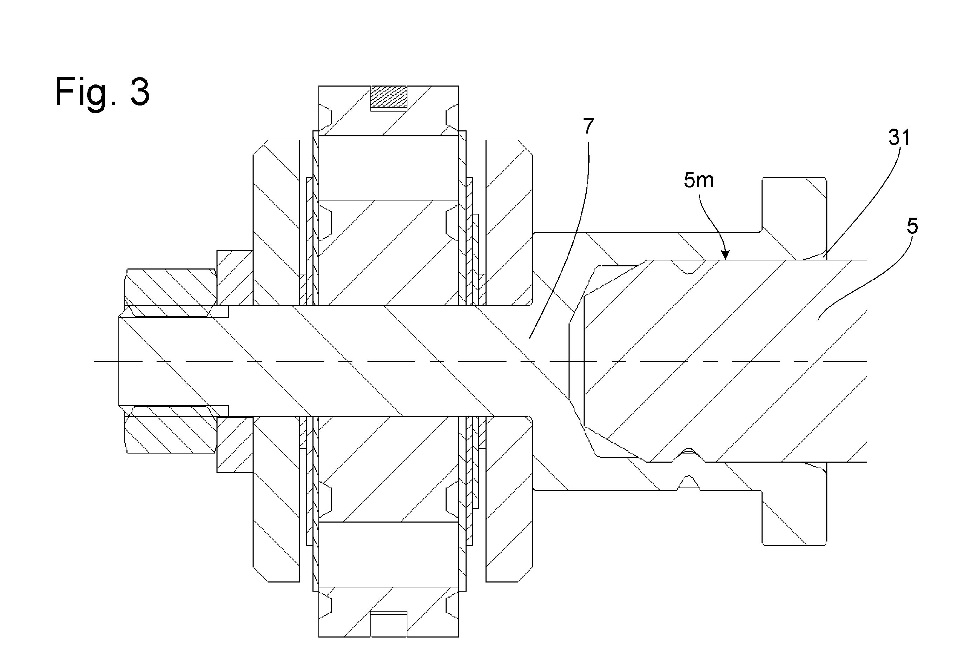

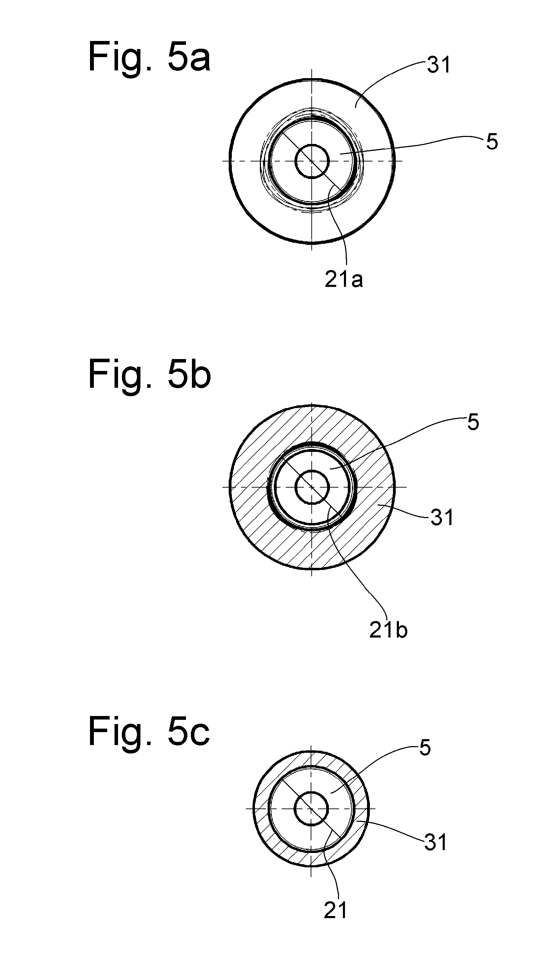

Die Fig. 3 zeigt eine Verbindung Kolbenstange-Kolbenstangenzapfen5; 7, bei der dasselbe Befestigungsprinzip wie in den vorangegangenen Figuren 1; 2a - 2d verwendet wird. Abweichend kommt ein Kolbenstangenzapfen 7 zur Anwendung, der eine topfförmige Aufnahme 31 für ein Ende der Kolbenstange 5 aufweist. Die Kolbenstange 5 verfügt über eine Mantelfläche 5 m konstanten Außendurchmesser und kann als Rohr- oder Vollmaterialteil ausgeführt sein. Die topfförmige Aufnahme 31 umfasst innenseitig einen Konus mit unrundem Querschnitt 21a - 21 c, der ebenfalls von einem Polygon-Profil s. Fig. 5a - 5c gebildet wird. Der Konus verengt sich in Richtung eines Bodens 33 des Kolbenstangenzapfens 7. Um den Eintrittsquerschnitt der konischen Aufnahme 31 möglichst ohne ein Anwachsen der Wandstärke des Kolbenstangenzapfens 7 realisieren zu können, verfügt der Kolbenstangenzapfen 7 im Bereich der Aufnahme 31 über eine außenseitigen Ringsteg 35, der am oberen Rand des Eintrittsquerschnitts 21 a ansetzt.

Dieser Ringsteg 35 verfügt über eine größere Wandstärke als die topfförmige Aufnahme 31 des Kolbenstangenzapfens 7 und kann z. B. als Anschlagteller für einen Zuganschlag dienen, wie er z. B. aus der DE 34 40 559 A1 bekannt ist.

### Bezugszeichenliste

- 1: Schwingungsdämpfer
- 3: Zylinder
- 5: Kolbenstange
- 5m: Mantelfläche
- 5ü: Überdeckungsbereich
- 7: Kolbenstangenzapfen
- 9: Kolben
- 11: Tragabschnitt
- 13: Ventilscheiben
- 15: Drosselkanäle
- 17: Kolbenmutter
- 19: Flansch
- 21: Befestigungsabschnitt
- 21a-21c: unrunder Querschnitt
- 23: Anschlagfläche
- 25: Stirnfläche
- 27: Innenmantelfläche
- 29: Sicherungsverbindung
- 31: topfförmige Aufnahme
- 33: Boden
- 35: Ringsteg

## Patentansprüche

1. Kolbenstange (5), die mit einem Kolbenstangenzapfen (7) über eine Einschubverbindung axial in Überdeckung steht, wobei der Überdeckungsbereich der Kolbenstange (5) mit dem Kolbenstangenzapfen (7) zumindest teilweise als Konus ausgeführt ist und eine in Längsrichtung der Kolbenstange (3) kraftschlüssige Verbindung bildet, wobei eine Formschlussverbindung im Überdeckungsbereich (5ü) eine Verdrehsicherung darstellt,
**dadurch gekennzeichnet,**
**dass** eines der zu verbindenden Bauteile Kolbenstange-Kolbenstangenzapfen (5, 7) im Überdeckungsbereich 5ü mit dem anderen Bauteil im unmontierten Zustand einen Konus mit einem unrunden, mit einem Übermaß ausgeführten Querschnitt (21 a - 21 c) zum anderen Bauteil aufweist.

2. Kolbenstange nach Anspruch 1,
**dadurch gekennzeichnet,**
**dass** der unrunde Querschnitt (21 a - 21 c) als ein N-Eck-Polygon ausgeführt ist.

3. Kolbenstange nach Anspruch 1,
**dadurch gekennzeichnet,**
**dass** die Kolbenstange (5) im unmontierten Zustand des Kolbenstangenzapfens (7) im Überdeckungsbereich (5m; 5ü) eine Mantelfläche mit einem konstanten Durchmesser aufweist.

4. Kolbenstange nach Anspruch 1,
**dadurch gekennzeichnet,**
**dass** der Kolbenstangenzapfen (7) in einen hohlen Abschnitt der Kolbenstange (7) eingepresst ist.

5. Kolbenstange nach Anspruch 1,
**dadurch gekennzeichnet,**
**dass** der Kolbenstangenzapfen (7) eine kreisringförmige Anschlagfläche (23) aufweist, die an einer Stirnfläche (25) der Kolbenstange (5) anliegt.

6. Kolbenstange nach Anspruch 1,
**dadurch gekennzeichnet,**
**dass** der Kolbenstangenzapfen (7) eine topfförmige Aufnahme (31) für ein Ende der Kolbenstange (5) aufweist.

7. Kolbenstange nach Anspruch 6,
**dadurch gekennzeichnet,**
**dass** der Kolbenstangenzapfen (7) im Bereich der Aufnahme (31) einen außenseitigen Ringsteg (35) aufweist.

8. Kolbenstange nach Anspruch 7,
**dadurch gekennzeichnet,**
**dass** die Wandstärke des außenseitigen Ringstegs (35) am Kolbenstangenzapfen (7) größer ist als die Wandstärke im Bereich der Aufnahme (31).

9. Kolbenstange nach Anspruch 1,
**dadurch gekennzeichnet,**
**dass** zwischen der Kolbenstange (3) und dem Kolbenstangenzapfen (7) eine axiale Sicherungsverbindung (29) vorliegt.

10. Kolbenstange nach Anspruch 9,
**dadurch gekennzeichnet,**
**dass** die Sicherungsverbindung (29) von mindestens einer Sicke gebildet wird.
